# EUROPÄISCHE PATENTSCHRIFT

(11) **EP 2 548 106 B1**
(45) Veröffentlichungstag und Bekanntmachung des Hinweises auf die Patenterteilung: **09.05.2018**
(21) Anmeldenummer: 11709328.6
(22) Anmeldetag: 19.02.2011
(51) Int. Cl.: G06F 3/048, G01C 21/36

(54) **VERFAHREN ZUR STEUERUNG EINES ELEKTRONISCHEN SYSTEMS FÜR EIN FAHRZEUG SOWIE ENTSPRECHENDE STEUERUNG**
METHOD FOR CONTROLLING AN ELECTRONIC SYSTEM FOR A VEHICLE AND CORRESPONDING CONTROLLER
PROCÉDÉ DE COMMANDE D'UN SYSTÈME ÉLECTRONIQUE POUR UN VÉHICULE, AINSI QUE COMMANDE CORRESPONDANTE

(30) Priorität: 18.03.2010 DE 102010011885
(43) Veröffentlichungstag der Anmeldung: 23.01.2013
(73) Patentinhaber: Volkswagen Aktiengesellschaft, 38436 Wolfsburg (DE)
(72) Erfinder: MISCHKE, Michael, 30167 Hannover (DE); WITTKÄMPER, Michael, 38102 Braunschweig (DE); OEL, Peter, 94065 Redwood City, CA (US)
(86) Internationale Anmeldenummer: PCT/EP2011/000804
(87) Internationale Veröffentlichungsnummer: WO 2011/113513

(56) Entgegenhaltungen:
- DE-A1-102008 021 185
- US-A- 5 877 751
- US-A1- 2009 132 921

## Beschreibung

Die vorliegende Erfindung betrifft ein Verfahren zur Steuerung oder Bedienung eines elektronischen Systems mit insbesondere komplexem Inhalt für ein Fahrzeug sowie eine entsprechend ausgestaltete Steuerung.
Nach dem Stand der Technik sind Verfahren bekannt, um in einer Ordnerstruktur Ebenen hinab oder herauf zu gelangen, siehe beispielsweise US 2009/0144642 A1 oder DE 10 2008 021185 A1. Um allerdings bestimmte Funktionen, wie z.B. eine Suchfunktion oder das Abspielen eines Liedes, zu aktivieren, sind die nach dem Stand der Technik bekannten Bedienkonzepte kompliziert, so dass eine Bedienung weiterer Menüinteraktion bedarf und sich Systeme damit dem Ziele einer einfachen Bedienung immer weiter entfernen.
Daher stellt sich die vorliegende Erfindung die Aufgabe, die Steuerung eines elektronischen Systems für ein Fahrzeug zu erleichtern.
Erfindungsgemäß wird diese Aufgabe durch ein Verfahren zur Steuerung eines elektronischen Systems für ein Fahrzeug nach Anspruch 1, durch eine Steuerung eines elektronischen Systems für ein Fahrzeug nach Anspruch 4 und durch ein Fahrzeug nach Anspruch gelöst. Die abhängigen Ansprüche definieren bevorzugte und vorteilhafte Ausführungsformen der vorliegenden Erfindung.
Im Rahmen der vorliegenden Erfindung wird ein Verfahren zur Steuerung eines elektronischen Systems für ein Fahrzeug bereitgestellt. Dabei werden Informationen auf einer Anzeige dargestellt. Eine Benutzereingabe (z.B. eine Geste auf einem Touchscreen) zur Steuerung des Systems wird abhängig von den dargestellten Informationen erfasst. Abhängig von dieser Benutzereingabe wird ein Abstraktionsniveau (Zoomstufe), mit welchem die Informationen auf der Anzeige dargestellt werden, bestimmt. Dabei definiert das Abstraktionsniveau einen Umfang von Details (d.h. welche und wie viele Details), mit welchen die entsprechenden Informationen auf der Anzeige dargestellt werden, und eine mit diesen Details korrespondierende Funktionalität (z.B. welche Bedienelemente und Anzeigeelemente werden angepasst an die dargestellten Details verwendet). Je höher/tiefer das Abstraktionsniveau eingestellt ist, desto geringer / größer oder detailreicher ist der Umfang der Details und Funktionen. Zusätzlich zu den Informationen werden Zusatzangaben auf der Anzeige dargestellt, welche zusätzliche Angaben über die aktuell auf der Anzeige dargestellten Informationen umfassen. Ein Typ dieser Zusatzangaben wird dabei abhängig von einem aktuellen Abstraktionsniveau, d.h. einem Abstraktionsniveau der aktuell dargestellten Informationen, und/oder abhängig von einem Typ der dargestellten Informationen bestimmt.

Dabei umfassen die Zusatzangaben Bedienelemente zur Bedienung und Aktivierung bestimmter Funktionen des elektronischen Systems oder Eingabemöglichkeiten, um das elektronische System mit bestimmten Eingaben zu versorgen.

Indem der Typ der Zusatzangaben an das Abstraktionsniveau angepasst wird, mit welchem die auf der Anzeige dargestellten Informationen abgebildet werden, können vorteilhafterweise jeweils diejenigen Zusatzangaben dargestellt werden, welche für das jeweilige Abstraktionsniveau am sinnvollsten sind. Dies gilt auch, wenn der Typ der Zusatzangaben an den Typ der dargestellten Informationen angepasst wird. Dadurch ist es möglich, die Zusatzangaben (z.B. Bedienelemente) an verschiedene Objekttypen anzupassen, welche auf demselben Abstraktionsniveau (Zoomstufe) dargestellt werden.

Bei der Darstellung der Informationen mit dem höchsten Abstraktionsniveau können Sucheingabemittel (z.B. eine Sucheingabemaske) als Zusatzangabe dargestellt werden. Über diese Sucheingabemittel kann ein Benutzer einen Suchbegriff eingeben, so dass diesem Suchbegriff entsprechende Informationen gesucht und auf der Anzeige dargestellt werden können.

Indem jeweils beim höchsten Abstraktionsniveau die Sucheingabemittel dargestellt werden, kann eine Bedienperson vorteilhafterweise recht einfach nur durch eine Bedienung einer Zoom-Funktion (z.B. eines Drehdrückstellers) zu den Sucheingabemitteln gelangen, um eine entsprechende Sucheingabe vorzunehmen.

Eine weitere Möglichkeit besteht darin, dass bei einer Darstellung der Informationen nur dann Bedienelemente angeboten werden, wenn die dargestellten Informationen ein Objekt repräsentieren, welches durch die Bedienelemente bedient, aktiviert oder deaktiviert werden kann.

Dadurch ist es beispielsweise in Medienkontexten möglich, ausgehend von einer geräteübergreifenden Übersicht beispielsweise den MP3-Player auszuwählen und diesen über die Bedienelemente, welche auf diesen MP3-Player zugeschnitten sind, zu bedienen.

Mit anderen Worten kann abhängig von einer über die Bedienelemente vorgenommenen Benutzereingabe eine Funktion eines Objektes, welches anhand der dargestellten Informationen repräsentiert wird, gesteuert werden.

Die Bedienung der dargestellten Objekte ist dadurch vorteilhafterweise intuitiv, da die Bedienelemente an die dargestellten Objekte oder an das dargestellte Objekt angepasst werden.

Das elektronische System umfasst dabei insbesondere ein oder mehrere Systeme, welche aus einer Menge ausgewählt sind, wobei diese Menge folgende Systeme umfassen kann:
- ein Navigationssystem,
- ein Telefonsteuerungssystem, d.h. ein System, mit welchem z.B. ein mit dem Fahrzeug gekoppeltes Mobiltelefon oder ein im Fahrzeug installiertes Telefon gesteuert werden kann,
- ein Audiosystem, z.B. ein Radio, ein MP3-Player oder ein CD-Player,
- ein Videosystem, z.B. ein Fernseher, ein Computer oder ein DVD-Träger,
- ein Klimaanlagensteuerungssystem, d.h. ein System, mit welchem eine Klimaanlage des Fahrzeugs gesteuert werden kann, und
- ein System, um bestimmte Konfigurationsparameter des Fahrzeugs einzustellen, um z.B. Sitzeinstellungen, Spiegeleinstellungen oder sonstige Fahrzeugeinsteliungen vorzunehmen.

Zur Steuerung verschiedener Systeme im Fahrzeug wird insbesondere eine Übersicht des Fahrzeugs in einer Vogelperspektive dargestellt. Zoomt man zu einem bestimmten System, z.B. dem Fahrersitz, erscheinen auf der Anzeige als Zusatzangaben Bedienelemente, mit denen man den Fahrersitz einstellen kann. Dabei sind die dargstellten Bedienelemente weniger von dem Abstraktionsniveau, sondern mehr von dem Objekttyp (Systemtyp) abhängig.

Zur Steuerung des Telefonsteuerungssystems werden z.B. von links nach rechts alphabetisch geordnete Namen (und Nummern) dargestellt. Zoomt man höher, bekommt man auf dem höchsten Abstraktionsniveau eine Sucheingabemaske (mit Spracheingabemöglichkeit) angeboten. Zoomt man zu einem bestimmten Namen, werden Bedienelemente als Zusatzangaben eingeblendet, mit denen man eine Telefonverbindung aufbauen und unterbrechen kann. Auf der untersten Zoomstufe werden als Zusatzangaben Eingabemittel bereitgestellt, um eine Telefonnummer per Hand oder sprachgesteuert eingeben zu können.

Gemäß einer erfindungsgemäßen Ausführungsform wird zur Bedienung von Audiosystemen als Standardeinstellung (Default) eine geräteübergreifende Übersicht (z.B. Radiosender, Internetradiostationen, MP3-Dateien, Playlists, Podcasts usw.) abgebildet. Zoomt man aus dieser Ansicht höher, bekommt man eine Sucheingabemaske zur Eingabe eines Suchbegriffs per Hand oder sprachgesteuert. Zoomt man hinein, wird ein entsprechendes Audio-System aktiviert, welches möglicherweise ein zufälliges Lied spielt. Auf der Anzeige werden Bedienelemente zur Bedienung dieses Players dargestellt.

Im Rahmen der vorliegenden Erfindung wird auch eine Steuerung eines elektronischen Systems für ein Fahrzeug bereitgestellt. Dabei umfasst die Steuerung Steuermittel, Eingabemittel und eine Anzeige. Mittels der Steuermittel wird über die Eingabemittel ein Abstraktionsniveau erfasst, in welchen Informationen auf der Anzeige dargestellt werden. Die Steuermittel erfassen abhängig von den dargestellten Informationen über die Eingabemittel Steuereingaben und steuern das System über diese Steuereingaben. Zusätzlich zu den Informationen stellen die Steuermittel Zusatzangaben, welche zusätzliche Angaben über die aktuell auf der Anzeige dargestellten Informationen umfassen, auf der Anzeige dar. Dabei ist ein Typ dieser Zusatzangaben abhängig von dem Abstraktionsniveau der aktuell dargestellten Informationen und/oder abhängig von einem Typ der dargestellten Informationen.

Wenn die Steuerung einen Touchscreen umfasst, können die Eingabemittel und die Anzeige über diesen Touchscreen ausgebildet werden.

Darüber hinaus können die Eingabemittel einen Drehdrücksteller und/oder ein Touchpad umfassen, mit welchem zum einen eine Zoom-Funktion und zum anderen eine Auswahlfunktion realisierbar ist. Ein Touchpad bzw. Tastfeld bezeichnet dabei eine berührungsempfindliche Fläche, welche beispielsweise als Maus- und Tastenersatz fungiert.

Schließlich wird im Rahmen der vorliegenden Erfindung ein Fahrzeug bereitgestellt, welches eine erfindungsgemäße Steuerung umfasst.

Die Vorteile der erfindungsgemäßen Steuerung und des erfindungsgemäßen Fahrzeugs entsprechen im Wesentlichen den Vorteilen des erfindungsgemäßen Verfahrens, welche vorab im Detail ausgeführt worden sind, so dass hier auf eine Wiederholung verzichtet wird.

Mit der vorliegenden Erfindung können Bedienkonzepte vorteilhafterweise mit einer im Vergleich zum Stand der Technik geringeren Anzahl von Menüschritten (Bedienschritten) realisiert werden, indem die Bedienung größtenteils über eine Zoom-Funktion (Auswahl eines Abstraktionsniveaus, mit welchem die Informationen auf der Anzeige dargestellt werden) erfolgt und abhängig von dem gewählten Abstraktionsniveau und/oder abhängig von dem Typ der dargestellten Informationen gezielt an das jeweilige Abstraktionsniveau und/oder an den jeweiligen Informationstyp angepasste Bedienelemente angeboten werden.

Die vorliegende Erfindung ist insbesondere zur Bedienung von elektronischen Systemen eines Fahrzeugs geeignet. Selbstverständlich ist die vorliegende Erfindung nicht auf diesen bevorzugten Anwendungsbereich eingeschränkt, da die vorliegende Erfindung auch zur Bedienung von elektronischen Systemen außerhalb eines Fahrzeugs, z.B. zur Bedienung eines Computers oder eines Mobilgerätes, eingesetzt werden kann. Darüber hinaus ist die vorliegende Erfindung auch zur Bedienung von elektronischen Systemen bei Flugzeugen, Schiffen und gleisgebundenen Fahrzeugen geeignet.

Im Folgenden wird die vorliegende Erfindung anhand bevorzugter erfindungsgemäßer Ausführungsformen im Detail mit Bezug zu den Figuren beschrieben.
- In Fig. 1: wird die vorliegende Erfindung bei einer Steuerung eines MP3-Players beschrieben.
- In Fig. 2: wird die vorliegende Erfindung bei einer Steuerung eines Navigationssystems beschrieben.
- In Fig. 3: ist schematisch ein erfindungsgemäßes Fahrzeug mit einer erfindungsgemäßen Steuerung dargestellt.

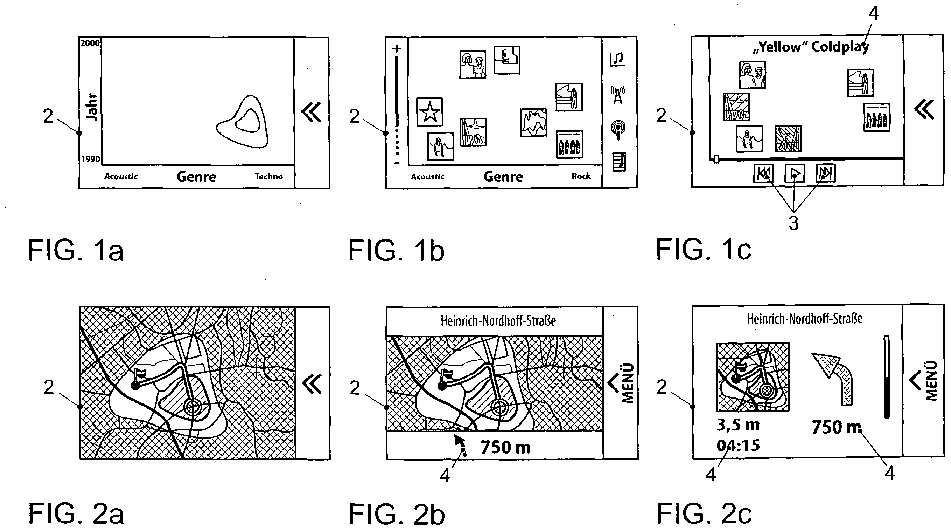

In den Figuren 1a bis 1c ist die Steuerung eines MP3-Players (Medienplayer) dargestellt. In Fig. 1a und in Fig. 1b ist auf einem Touchscreen 2 ein relativ hohes Abstraktionsniveau dargestellt, so dass auf dem Touchscreen 2 keine Bedienelemente 3 abgebildet sind. Erst in Fig. 1c, welche das niedrigste Abstraktionsniveau darstellt, werden Bedienelemente 3 angeboten, um ein auf dem Touchscreen 2 dargestelltes Objekt (in diesem Fall das Lied "Yellow" von Coldplay) abzuspielen oder um den von dem aktuellen Titel aus gesehen vorherigen oder nächsten Titel auszuwählen.

In den Figuren 2a bis 2c ist die Steuerung eines Navigationssystems dargestellt, wobei in diesem Fall die Ausgabe des Navigationssystems auf einem Touchscreen 2 bei laufender Zielführung gesteuert wird. Wählt man das niedrigste Abstraktionsniveau (unterste Zoomstufe), bekommt man die in Fig. 2c dargestellte Darstellung, in welcher ein Abbiegepfeil 4 als Zusatzangabe die nächste Fahrtrichtungsänderung und ein Laufbalken die Entfernung bis zu der Stelle angibt, an welcher diese Fahrtrichtungsänderung auftritt. Auf der obersten Zoomstufe (höchstes Abstraktionsniveau, nicht dargestellt) bekommt man eine Sucheingabemaske für die Definition eines Ziels, wobei die Definition auch mittels Spracheingabe (gerade bei fahrendem Fahrzeug) möglich ist.

Durch die Reduktion von Bedienelementen und klassischen Bedienparadigmen, wie Softkeys und Zurück-Tasten, kann die Interaktionszeit und die Erlernzeit des zu bedienenden elektronischen Systems stark verkürzt werden und somit gerade beim Einsatz in einem Fahrzeug die Sicherheit erhöht werden.

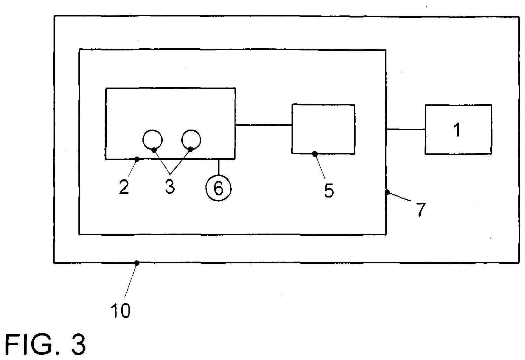

In Fig. 3 ist schematisch ein erfindungsgemäßes Fahrzeug 10 dargestellt, welches eine erfindungsgemäße Steuerung 7 umfasst, mit welcher ein elektronisches System 1 des Fahrzeugs 10 gesteuert wird. Die Steuerung 7 umfasst ihrerseits einen Touchscreen 2, einen Mikroprozessor 5 und einen Drehdrücksteller 6, mit welchem eine Zoom-Funktion der Steuerung 7 bedient wird. Auf dem Touchscreen 2 befinden sich zwei Bedienelemente 3, welche an die auf dem Touchscreen 2 dargestellten Informationen angepasst sind.

## Patentansprüche

1. Verfahren zur Steuerung eines elektronischen Systems (1) für ein Fahrzeug (10),
wobei Informationen auf einer Anzeige (2) dargestellt werden,
wobei eine Benutzereingabe zur Steuerung des Systems (1) abhängig von den dargestellten Informationen erfasst wird,
wobei ein Abstraktionsniveau, mit welchem die Informationen auf der Anzeige (2) dargestellt werden, abhängig von der Benutzereingabe bestimmt wird, wobei das Abstraktionsniveau einen Umfang von Details, mit welchen die entsprechenden Informationen auf der Anzeige (2) dargestellt werden, und eine mit diesen Details korrespondierende Funktionalität definiert, wobei der Umfang der Details abnimmt, je höher das Abstraktionsniveau ist,
wobei Zusatzangaben (3, 4), welche zusätzliche Angaben über die aktuell auf der Anzeige (2) dargestellten Informationen umfassen, zusätzlich zu den Informationen auf der Anzeige (2) dargestellt werden,
wobei ein Typ der Zusatzangaben abhängig von dem Abstraktionsniveau der aktuell dargestellten Informationen und/oder von einem Typ der aktuell dargestellten Informationen bestimmt wird,
wobei das elektronische System Audiosysteme umfasst, und
wobei bei einem Hineinzoomen eines der Audiosysteme aktiviert wird und Bedienelemente zur Bedienung des Audiosystems auf der Anzeige (2) dargestellt werden,
**dadurch gekennzeichnet,**
**dass** als Standardeinstellung eine geräteübergreifende Übersicht auf der Anzeige (2) abgebildet wird, und
**dass** bei einem Höherzoomen aus der Standardeinstellung eine Sucheingabemaske zur Eingabe eines Suchbegriffs auf der Anzeige (2) abgebildet wird

2. Verfahren nach Anspruch 1,
**dadurch gekennzeichnet,**
**dass** die Zusatzangaben bei der Darstellung der Informationen nur dann Bedienelemente (3) umfassen, wenn über die dargestellten Informationen ein Objekt repräsentiert wird, welches mittels der Bedienelemente bedient wird.

3. Verfahren nach Anspruch 2, **dadurch gekennzeichnet, dass** abhängig von einer mittels der Bedienelemente (3) vorgenommenen Benutzereingabe eine Funktion eines Objektes, welches über die Informationen dargestellt wird, gesteuert wird.

4. Steuerung eines elektronischen Systems (1) für ein Fahrzeug (10),
wobei die Steuerung (7) Steuermittel (5), Eingabemittel (2; 6) und eine Anzeige (2) umfasst, wobei die Steuermittel (5) derart ausgestaltet sind, dass die Steuermittel (5) über die Eingabemittel (2; 6) ein Abstraktionsniveau erfassen, mit welchem Informationen auf der Anzeige (2) dargestellt werden, wobei die Steuermittel (5) abhängig von den dargestellten Informationen mittels der Eingabemittel (2; 6) Steuereingaben erfassen und das System (1) abhängig von den Steuereingaben steuern,
wobei das Abstraktionsniveau einen Umfang von Details definiert, mit welchen die entsprechenden Informationen auf der Anzeige (2) dargestellt werden, wobei der Umfang der Details um so geringer ist, je höher das Abstraktionsniveau ist,
wobei die Steuermittel (5) derart ausgestaltet sind, dass die Steuermittel (5) Zusatzangaben (3, 4), welche zusätzliche Angaben über die aktuell auf der Anzeige (2) dargestellten Informationen umfassen, zusätzlich zu den Informationen auf der Anzeige (2) darstellen und einen Typ der Zusatzangaben (3, 4) abhängig von dem Abstraktionsniveau der aktuell dargestellten Informationen und/oder abhängig von einem Typ der aktuell dargestellten Informationen bestimmen,
wobei das elektronische System Audiosysteme umfasst,
wobei die Steuermittel (5) ausgestaltet sind,
um über die Eingabemittel (2; 6) ein Hineinzoomen zu erfassen und bei einem Erfassen eines Hineinzoomens eines der Audiosysteme zu aktivieren und Bedienelemente zur Bedienung des Audiosystems auf der Anzeige darzustellen,
**dadurch gekennzeichnet,**
**dass** die Steuermittel (5) zusätzlich ausgestaltet sind,
um als Standardeinstellung eine geräteübergreifende Übersicht auf der Anzeige (2) abzubilden, und
um über die Eingabemittel (2; 6) ein Höherzoomen aus der Standardeinstellung zu erfassen und bei einem Erfassen eines Höherzoomens aus der Standardeinstellung eine Sucheingabemaske zur Eingabe eines Suchbegriffs auf der Anzeige (2) abzubilden.

5. Steuerung nach Anspruch 4, **dadurch gekennzeichnet, dass** die Eingabemittel und die Anzeige einen Touchscreen (2) umfassen.

6. Steuerung nach Anspruch 4 oder 5, **dadurch gekennzeichnet, dass** die Eingabemittel einen Drehdrücksteller (6) und/oder ein Touchpad umfassen.

7. Steuerung nach einem der Ansprüche 4 bis 6, **dadurch gekennzeichnet, dass** die Steuerung (7) zur Durchführung des Verfahrens nach einem der Ansprüche 1-3 ausgestaltet ist.

8. Fahrzeug mit einer Steuerung (7) nach einem der Ansprüche 4-7.

## Claims

1. Method for controlling an electronic system (1) for a vehicle (10),
wherein information is presented on a display (2), wherein a user input for controlling the system (1) is detected on the basis of the presented information,
wherein an abstraction level at which the information is presented on the display (2) is determined on the basis of the user input, wherein the abstraction level defines a scope of details with which the applicable information is presented on the display (2) and a functionality corresponding to these details, the scope of the details decreasing the higher the abstraction level is,
wherein supplementary statements (3, 4) comprising additional statements about the information currently presented on the display (2) are presented on the display (2) in addition to the information,
wherein a type of the supplementary statements is determined on the basis of the abstraction level of the currently presented information and/or on the basis of a type of the currently presented information,
wherein the electronic system comprises audio systems, and
wherein zooming in results in one of the audio systems being activated and operator control elements for operating the audio system being presented on the display (2),
**characterized**
**in that** a cross-device overview is depicted on the display (2) as a standard setting, and
**in that** zooming higher from the standard setting results in a search input mask for inputting a search term being depicted on the display (2).

2. Method according to Claim 1,
**characterized**
**in that** the supplementary statements for the presentation of the information comprise operator control elements (3) only if the presented information is used to represent an object that is operated by means of the operator control elements.

3. Method according to Claim 2, **characterized in that** a user input performed by means of the operator control elements (3) is taken as a basis for controlling a function of an object that is presented by means of the information.

4. Controller of an electronic system (1) for a vehicle (10),
wherein the controller (7) comprises control means (5), input means (2; 6) and a display (2), wherein the control means (5) are configured such that the control means (5) use the input means (2; 6) to detect an abstraction level at which information is presented on the display (2), wherein the control means (5) take the presented information as a basis for using the input means (2; 6) to detect control inputs and control the system (1) on the basis of the control inputs,
wherein the abstraction level defines a scope of details with which the applicable information is presented on the display (2), the scope of the details being smaller the higher the abstraction level is,
wherein the control means (5) are configured such that the control means (5) present supplementary statements (3, 4), comprising additional statements about the information currently presented on the display (2), on the display (2) in addition to the information and determine a type of the supplementary statements (3, 4) on the basis of the abstraction level of the currently presented information and/or on the basis of a type of the currently presented information, wherein the electronic system comprises audio systems,
wherein the control means (5) are configured to use the input means (2; 6) to detect zooming in and, when zooming in is detected, to activate one of the audio systems and to present operator control elements for operating the audio system on the display,
**characterized**
**in that** the control means (5) are additionally configured
to depict a cross-device overview on the display (2) as a standard setting, and
to use the input means (2; 6) to detect zooming higher from the standard setting and, when zooming higher from the standard setting is detected, to depict a search input mask for inputting a search term on the display (2).

5. Controller according to Claim 4, **characterized in that** the input means and the display comprise a touchscreen (2).

6. Controller according to Claim 4 or 5, **characterized in that** the input means comprise a rotary/push control (6) and/or a touchpad.

7. Controller according to one of Claims 4 to 6, **characterized in that** the controller (7) is configured to perform the method according to one of Claims 1-3.

8. Vehicle having a controller (7) according to one of Claims 4-7.

## Revendications

1. Procédé de commande d'un système électronique (1) d'un véhicule (10),
dans lequel des informations sont représentées sur un afficheur (2),
dans lequel une entrée de l'utilisateur destinée à commander le système (1) est détectée en fonction des informations représentées,
dans lequel un niveau d'abstraction avec lequel les informations sont représentées sur l'afficheur (2) est déterminé en fonction de l'entrée de l'utilisateur, dans lequel le niveau d'abstraction définit un niveau des détails avec lequel les informations correspondantes sont représentées sur l'afficheur (2) et une fonctionnalité qui correspond à ces détails, dans lequel le niveau d'abstraction est d'autant plus élevé que le niveau des détails est faible,
dans lequel des données complémentaires (3, 4), qui comprennent des indications supplémentaires sur les informations actuellement représentées sur l'afficheur (2), sont représentées en plus des informations sur l'afficheur (2),
dans lequel un type des données complémentaires est déterminé en fonction du niveau d'abstraction des informations actuellement représentées et/ou d'un type des informations actuellement représentées,
dans lequel le système électronique comprend des systèmes audio, et
dans lequel, lors d'un zoom avant, l'un des systèmes audio est activé et des éléments de commande permettant de commander le système audio sont représentés sur l'afficheur (2),
**caractérisé en ce qu'**une vue d'ensemble de l'appareil est affichée sur l'afficheur (2) en tant que réglage standard, et
**en ce qu'**un masque de recherche permettant l'entrée d'un terme de recherche est affiché sur l'afficheur (2) lors d'un zoom avant plus important à partir du réglage standard.

2. Procédé selon la revendication 1,
**caractérisé en ce que** les données complémentaires, lors de la représentation des informations, ne comprennent des éléments de commande (3) que si un objet qui est représenté par le biais des informations affichées est commandé au moyen des éléments de commande.

3. Procédé selon la revendication 2, **caractérisé en ce qu'**une fonction d'un objet représenté par le biais des informations est commandée en fonction d'une entrée de l'utilisateur effectuée au moyen des éléments de commande (3).

4. Dispositif de commande d'un système électronique (1) d'un véhicule (10),
dans lequel le dispositif de commande (7) comprend des moyens de commande (5), des moyens d'entrée (2 ; 6) et un afficheur (2),
dans lequel les moyens de commande (5) sont configurés de manière à ce que les moyens de commande (5) détectent par l'intermédiaire des moyens d'entrée (2 ; 6) un niveau d'abstraction avec lequel des informations sont représentées sur l'afficheur (2), dans lequel les moyens de commande (5) détectent au moyen des moyens d'entrée (2 ; 6) des entrées de commande en fonction des informations représentées et commandent le système (1) en fonction des entrées de commande,
dans lequel le niveau d'abstraction définit un niveau des détails avec lequel les informations correspondantes sont représentées sur l'afficheur (2), dans lequel le niveau d'abstraction est d'autant plus élevé que le niveau de détail est faible,
dans lequel les moyens de commande (5) sont configurés de manière à ce que les moyens de commande (5) représentent sur l'afficheur (2), en plus des informations, des données complémentaires (3, 4) qui comprennent des indications supplémentaires sur les informations actuellement représentées sur l'afficheur (2) et déterminent un type des données complémentaires (3, 4) en fonction du niveau d'abstraction des informations actuellement représentées et/ou en fonction d'un type des informations actuellement représentées,
dans lequel le système électronique comprend des systèmes audio,
dans lequel les moyens de commande (5) sont configurés pour détecter un zoom avant par l'intermédiaire des moyens d'entrée (2 ; 6) et pour activer l'un des systèmes audio lors d'une détection de zoom avant et pour représenter sur l'afficheur des éléments de commande permettant de commander le système audio, **caractérisé en ce que** les moyens de commande (5) sont en outre configurés de manière à afficher sur l'afficheur (2) une vue d'ensemble de l'appareil en tant que réglage standard, et
pour détecter un zoom avant plus important à partir du réglage standard par l'intermédiaire des moyens d'entrée (2 ; 6) et, lors d'une détection d'un zoom avant plus important à partir du réglage standard, pour afficher un masque d'entrée de recherche permettant de saisir un terme de recherche sur l'afficheur (2).

5. Dispositif de commande selon la revendication 4, **caractérisé en ce que** les moyens d'entrée et l'afficheur comprennent un écran tactile (2).

6. Dispositif de commande selon la revendication 4 ou 5, **caractérisé en ce que** les moyens d'entrée comprennent une molette rotative (6) et/ou un pavé tactile.

7. Dispositif de commande selon l'une des revendications 4 à 6, **caractérisé en ce que** le dispositif de commande (7) est conçu pour mettre en oeuvre le procédé selon l'une des revendications 1-3.

8. Véhicule équipé d'un dispositif de commande (7) selon l'une des revendications 4-7.
